# EUROPEAN PATENT SPECIFICATION

(11) **EP 3 792 599 B1**
(45) Date of publication and mention of the grant of the patent: **03.05.2023**
(21) Application number: 19196863.5
(22) Date of filing: 12.09.2019
(51) Int. Cl.: G01D 5/20

(54) **SENSOR DEVICE FOR MEASURING THE ROTATIONAL POSITION OF AN ELEMENT**
SENSORVORRICHTUNG ZUR MESSUNG DER DREHPOSITION EINES ELEMENTS
DISPOSITIF DE CAPTEUR POUR MESURER LA POSITION ROTATIONNELLE D'UN ÉLÉMENT

(43) Date of publication of application: 17.03.2021
(73) Proprietor: TE Connectivity Belgium BVBA, 8020 Oostkamp (BE); TE Connectivity Germany GmbH, 64625 Bensheim (DE)
(72) Inventor: Ocket, Tom, 8820 Torhout (BE); Becker, Tobias, 68789 St. Leon-Rot (DE); Harz, Moritz, 67346 Speyer (DE)
(74) Representative: Grünecker Patent- und Rechtsanwälte PartG mbB

(56) References cited:
- WO-A1-2019/014690
- DE-A1-102015 220 624
- JP-A- 2018 151 230
- US-A1- 2016 223 358

## Description

The invention relates to a sensor device for measuring the rotational position of an element that is rotatable about an axis of rotation.

In order to provide a sensor device that is more tolerant towards misalignment, a known sensor device can comprise at least two sensing elements, wherein the at least two sensing elements are shifted with respect to each other by at least 120 degrees about the axis of rotation.

This allows a more precise measurement, even when misalignment occurs. For example, if the rotatable element is shifted without rotating, this could be interpreted as a rotation by a single sensing element as the signal in the sensing element changes. The use of two sensing elements can avoid such a misinterpretation, as the shifting would be sensed by both sensing elements. The signals would however be different than for a rotation. For example, a shifting might lead to a signal increase in both sensing elements while a rotation might cause a signal decrease in one sensing element and a signal increase in the other sensing element. It can thus be inferred whether a rotation or a shifting has taken place. Such an eccentricity thus does not have an effect on the correct measurement of the rotational position.

Further known is that the sensing elements can be electromagnetic sensing elements. This can make the operation simple.

In particular, the electromagnetic sensing elements can be electromagnetic transducers, each transducer having at least one sender member for emitting a magnetic field and at least two receiving members for receiving the magnetic field, wherein the at least two transducers are shifted with respect to each other by at least 120 degrees about the axis of rotation.

WO 2019/014690 A1 shows a device for measuring the rotational position of an axle and relates to the encoding based on configurations of the holes or conducting inlays with binary patterns. US 2016/223358 A1 discloses a device comprising several sensing elements that are arranged circularly around an axis of rotation. In JP 2018 151230 A, a multitude of sensing elements are arranged circularly around an axis, for example on opposite sides.

The object of the invention is to provide a solution that simplifies the electrical layout and allows an easy operation.

According to the invention, this is achieved when at least two receiving members of two different transducers are connected electrically to each other.

The solution according to the invention can be further improved by the following further embodiments and advantageous developments, which are independent of each other and can be combined arbitrarily as desired.

In further embodiments, the sensor device can have sensing elements that are based on optical measurements, measurements of the Hall-effect or the Magnetic Resistance or other measurement principles.

The sensor device can comprise an arcuate carrier with an opening that is adapted to receive the rotatable element perpendicular to the axis. Through this, the rotatable element can be inserted sideways, that means perpendicular to the axis of rotation.

The arcuate carrier can be partially annular, for example with an outer contour that has the shape of a circular arc and/or an inner contour that has the shape of a circular arc. The arcuate carrier can be C-shaped.

The carrier may be a planar carrier. This can allow a compact configuration. In particular, the plane of the carrier can be perpendicular to the axis of rotation.

The carrier can comprise a PCB to save space and costs.

For an efficient design, each of the sensing elements can be arranged closer to one end than to a central part of the arcuate carrier. Each of the sensing elements can be arranged at one end of the arcuate carrier. In particular, the two sensing elements can be arranged on two opposite ends.

In order to achieve a precise measurement, the arcuate carrier can extend for more than 180 degrees around the axis. Preferably, the arcuate carrier extends for more than 210 degrees, more preferably for more than 240 degrees around the axis.

The two sensing elements can be shifted to each other by more than 150 degrees. For example, they can be shifted by 180 degrees. They can be shifted by less than a full rotation, i.e. less than 360 degrees.

The two sensing elements can be arranged opposite to each other relative to the axis. This can make the mounting and the data acquisition easy.

In order to make the data-processing easy, the two sensing elements can be shifted by 180 degrees. In another embodiment, the two sensing elements can be shifted by less or more than 180 degrees. The value of shifting can be understood as the rotational difference between two corresponding elements on the two transducers, for example two central sections. The shifting can, in particular, be measured along the sensor device and/or a carrier, and not beyond a gap.

A rotational distance between the two sensing elements can be at least 90 degrees. The rotational distance can be understood as the distance between one end of one sensing element and an opposite end of the other sensing element. The shifting can, in particular, be measured along the sensor device and/or a carrier, and not beyond a gap.

The sensor device can comprise at least two controllers, each controller being adapted to control one sensing element. Such a configuration can provide a higher robustness against failures. If one of the two controllers fails, a measurement with the other controller and the other sensing element is still possible.

In a space and cost saving arrangement, the sensor device can comprise one controller adapted to control the at least two sensing elements.

At least one controller can be an integrated circuit (IC). This can allow a compact design.

At least one controller can be arranged on the arcuate carrier, in particular between the sensing elements, in particular the transducers, the sender members and/or the receiving members. This can make the configuration easy and compact.

To keep the electrical layout simple, the at least two sender members can be connected to each other. They can for example be connected directly by a single electrical connector.

In an advantageous embodiment, the two transducers are configured identical, each with a first receiving member and a second receiving member, wherein the first receiving member of one transducer is coupled with the second receiving member of the other transducer. This can help minimize errors. For example, if the first receiving members cause errors, such an error only occurs once.

The coupling can be a direct coupling through an intermediate element, preferably a single intermediate element. For example, raw signals can then be coupled electrically. The coupling can be an indirect coupling through several elements, for example through the controller. In this case, the results can be compared.

In a further advantageous embodiment, the second receiving member of one transducer is coupled with the first receiving member of the other transducer. This further minimizes errors. Errors that occur in the first receiving members then have the same effect on both measurement circles.

If four disturbing elements are used, the cross-coupling of the first and the second receiving members in the first and the second transducer leads to the fact that the signals from the two transducers 10 are not shifted by 180 degrees, which would be the physical shifting of the two transducers 10, but by (180° - 90°/4) which is 157.5°. Thus, when the signals are added up, the sine and the cosine will be identical. Similar considerations apply for all cases where there is an even number of disturbing elements. The angle would then be (180°-90°/n) with n being the number of disturbing elements.

In another embodiment, when an odd number of disturbing elements is present, a 180° shifting would not result in an exact mirroring. It is thus not necessary to change the relative angle between the two transducers and the two transducers can be located 180° to each other.

In order to compensate an external magnetic field, one transducer can be configured to emit and receive a first magnetic field that has, at the receiving members, a direction that is opposite to a direction of a second magnetic field emitted and received by the other transducer measured at the other receiving members. The external magnetic field thus does not have an influence on the total system as it is in one case added and in the other case subtracted from the magnetic field emitted by the transducers.

In an advantageous embodiment, the sender member and/or at least one receiving member lie in a plane. This makes the sensor device compact. Preferably, the sender member and the at least one receiving, more preferably, both receiving members lie in a plane. Preferably, the members lie in the same plane. The plane can be perpendicular to the axis of rotation. Such a plane has to be understood as a substantially flat object where one dimension is much smaller than the other two dimensions. Parts of the sensor device can for example be located on a front side of a PCB and other parts can be located on a back side of the PCB. In such an embodiment, the sensor device would still lie substantially in a plane. In an easy-to-manufacture embodiment, the sender member and/or at least one receiving member comprises a conductive path on a PCB. The sender member and/or the at least one receiving member can be planar electric components.

In order to generate a magnetic field, the sender member can comprise a coil. The coil can be planar. For example, the coil can be a spiral coil.

In a compact configuration, the sender member surrounds the receiving members.

The magnetic field can, in particular, be an alternating magnetic field. Such an alternating magnetic field can, for example, be generated by an alternating current.

The invention will now be described in greater detail and in an exemplary manner using advantageous embodiments and with reference to the drawings. The described embodiments are only possible configurations in which, however, the individual features as described above can be provided independently of one another or can be omitted.

In the figures,
- Fig. 1: shows a schematic perspective view of an embodiment of a sensor device;
- Fig. 2: shows a schematic perspective view of a further embodiment of transducers; and
- Fig. 3: shows a schematic perspective view of details of possible receiving members;
- Fig. 4: shows a schematic perspective view of a further embodiment of a sensor device;
- Fig. 5: shows a schematic perspective view of a further embodiment of a sensor device;
- Fig. 6: shows a schematic perspective view of a further embodiment of a sensor device;
- Fig. 7: shows a schematic perspective view of a further embodiment of a sensor device; and
- Fig. 8: shows a schematic perspective view of a further embodiment of a sensor device.

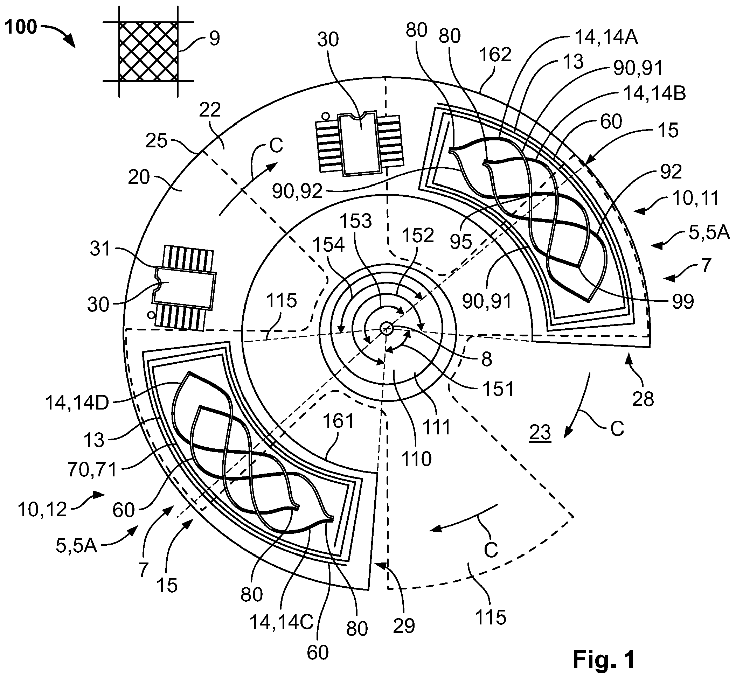

In Fig. 1, a sensor device 100 for measuring the rotational position of an element 110 that is rotatable about an axis of rotation 8 is shown. The rotatable element 110 is a shaft 111, for example a shaft of a car engine.

The sensor device 100 comprises two sensing elements 5, in particular two electromagnetic sensing elements 7 in the form of two electromagnetic transducers 10, wherein each transducer 10 has at least one sender member 13 for emitting a magnetic field and at least two receiving members 14 for receiving the magnetic field. A metallic element is attached to the rotatable element 110 such that it rotates with the element 110. In this example, four flaps 115 are connected to the shaft 111 and protrude sideways away from the shaft 111 perpendicular to the axis 8.

The flaps 115 disturb the magnetic field generated by the sender members 13 so that the receiving members 14 receive different magnetic strengths of the magnetic field depending on the position of the flaps 115 and thus on the rotational position of the element 110. From the signals received by the receiving members 14, the rotational position of the element 110 can hence be deduced.

The sensor device 100 comprises two sensing elements 5 that are shifted with respect to each other by at least 120 degrees about the axis of rotation 8. In the depicted example, the two sensing elements 5 in the form of the two transducers 10 are shifted by approximately 180 degrees. This means that corresponding parts on the two sensing elements 5 are shifted by approximately 180 degrees. For example, central parts 15 of the two sensing elements 5 are shifted by 180 degrees. The shifting angle 153 is measured along the sensor device 100, in particular along a circumferential direction C that runs around the axis 8 and is perpendicular to a radial direction R pointing away from the axis 8.

Thus, the two sensing elements 5 are arranged opposite to each other relative to the axis 8. The advantage of such a configuration is that if for example the axis 8 shifts without rotating, the sensor device 100 can still measure the rotational position accurately as an error induced in one of the two transducers 10 is compensated by an opposite error in the other transducer 10.

In other words, a first sensing element 5, 5A in the form of a first transducer 10, 11 is shifted by 180 degrees around the axis 8 relative to a second sensing element 5, 5B in the form of a second transducer 10, 12. This resembles a two-fold rotational symmetry.

Due to the fact that the transducers 10 each have a rotational extension, the rotational distance between the two transducers 10 is less than the shifting angle 153. An angle 154 of the rotational distance can, for example, be around 100 degrees in this case. This angle 154 can be measured from the end of one transducer 10, 11 to the neighboring end of the other transducer 10, 12.

The sensor device 100 comprises an arcuate carrier 20 with an opening 23 that is adapted to receive the rotatable element 110 perpendicular to the axis 8. The element 110 can thus be inserted sideways. This can be used to mount or unmount the sensor device 100 easily, for example, if it is necessary to replace the sensor device 100. The sensor device 100 and in particular the arcuate carrier 20 has a substantially partially annular shape or C-shape. An inner edge 161 and an outer edge 162 of the arcuate carrier are arc-shaped.

Each of the transducers 10 is arranged closer to one end 28, 29 than to a central part 25 of the arcuate carrier 20. Thus, each of the transducers 10 is arranged on one end 28, 29 of the arcuate carrier 20, the two transducers 10 being arranged on two opposite ends 28, 29.

The arcuate carrier 20 extends for more than 180 degrees around the axis 8. In the depicted example, the angle 152 of the extension of the arcuate carrier 20 is approximately 270 degrees. Consequently, an angle 151 over which the opening 23 extends is approximately 90 degrees.

The opening 23 provides an access channel for the rotatable element 110, the channel having at its narrowest part an inner width approximately 1.5 times to 2 times the diameter of the shaft 111 in order to allow an easy mounting.

In the depicted example, the sensor device 100 comprises two controllers 30 which are embodied as integrated circuits 31. Each of the controllers 13 is used for controlling one transducer 10. The data of the two controllers 13 can then be processed in a further, non-depicted module. Both controllers 30 are arranged on the arcuate carrier 20 between the two transducers 10. In another embodiment, only one controller 30 could be present for controlling both transducers 10.

Each of the receiving members 14 comprises two conductors 90 embodied as conductive paths 60 on the PCB 22. The conductive paths 60 resemble graphs of a periodic function, in particular a sine function. The conductors 90 thus have an elongated shape that is sinusoidal. The first conductor 90, 91 starts at a contact section 80 and runs over one period of the periodic function along a circumferential direction C. At a junction 99, it is connected to the second conductor 90, 92 which runs against the circumferential direction over one period back to the contact section 80. At a crossing 95, the first and the second conductor 90, 91, 92 are arranged on different levels, for example on a front side and a back side of the PCB 22. The sine function is used because it allows an easy calculation of the rotational angle by calculating the arctan. The sender members 13 comprise conductive paths 60 that form coils 70, in particular spiral coils 71 on the arcuate carrier 20, which is embodied as a PCB 22. When running a current through the sender members 13, a magnetic field results which is then disturbed by the flaps 115 and received by the receiving members 14. Depending on whether the current runs in one direction or the other, for example clockwise or counterclockwise in the sender member 13, the magnetic field is directed in one direction or the other.

When coupling the two sender members 13, one sender member 13 can be embodied to generate a magnetic field in one direction and the other sender member 13 can be adapted to generate a magnetic field in the opposite direction. Through this, an external magnetic field which runs parallel to the axis 8 and which disturbs the measurement, can be compensated as it is added to one of the magnetic fields and subtracted from the other magnetic field of the sender members 13. The effect of the external magnetic field is thus cancelled. One transducer 10, 11 can thus be configured to emit and receive a first magnetic field that has at the receiving members 14, 14A, 14B, a direction that is opposite to a direction of the second magnetic field emitted and received by the other transducer 10, 12 at the corresponding receiving members 14, 14C, 14D. Advantageously, the magnetic fields that are generated are alternating magnetic fields. These magnetic fields can be generated by applying alternating currents at the sender members 13.

In an advantageous embodiment, the two sender members 13 can be coupled or connected to each other directly or indirectly to allow an easy control.

Similarly, in addition to the at least two receiving members 14 of two different transducers 10 being connected electrically to each other, the receiving members 14 of the two transducers 10 can be connected or coupled to each other directly or indirectly.

Each of the receiving members 14 comprises a conductive path 60 on the PCB 22. The conductive path 60 resembles a graph of a periodic function, in particular a sine or a cosine function. It starts at a contact section 80 and runs over one period of the periodic function along a circumferential direction C. The path then changes the sign of the periodic function and runs against the circumferential direction over one period back to the contact section 80. Each of the receiving members 14 thus encloses or surrounds two convex areas and resembles two eyes.

In each transducer 10, the two receiving members 14 are shifted by a quarter of a period of the periodic function.

In order to avoid a crossing of the conductive paths 60, parts of the conductive paths 60 can be arranged on different levels which are, for example, separated by insulating layers or which can be arranged on a front side and a back side of the PCB 22.

In order to further minimize the errors, the two transducers 10, 11, 12 can be configured identically, each with a first receiving member 14, 14A, 14C and a second receiving member 14, 14B, 14D, and the first receiving member 14, 14 A of one transducer 10, 11 can be coupled with the second receiving member 14, 14 D of the second transducer 10, 12. The coupling can again be through an intermediate element, for example, a single intermediate element so that the raw electrical signals are combined, or indirectly coupled via further elements, for example a controller, so that the results are compared.

The second receiving member 14, 14B can be coupled with the first receiving member 14, 14C of the other transducer 10, 12 to further improve precision.

In the depicted embodiment, four flaps 115 are used. The cross-coupling of the first and the second receiving members 14 in the first and the second transducer 10 thus leads to the fact that the signals from the two transducers 10 are not shifted by 180 degrees, which would be the physical shifting of the two transducers 10, but by (180° - 90°/4) which is 157.5°. Thus, when the signals are added up, the sine and the cosine will be identical.

In another embodiment, when an odd number of flaps 115 is present, it is not necessary to change the relative angle between the two transducers 10. The two transducers 10 can be located 180° to each other as a 180° shifting would not result in an exact mirroring.

In each of the transducers 10, the sender member 13 surrounds the receiving members 14 to save space.

The sender members 13 and the receiving members 14 are basically flat or planar and lie in the plane 9 that is perpendicular to the axis 8. The entire sensor device 100 is basically a flat element arranged in this plane 9.

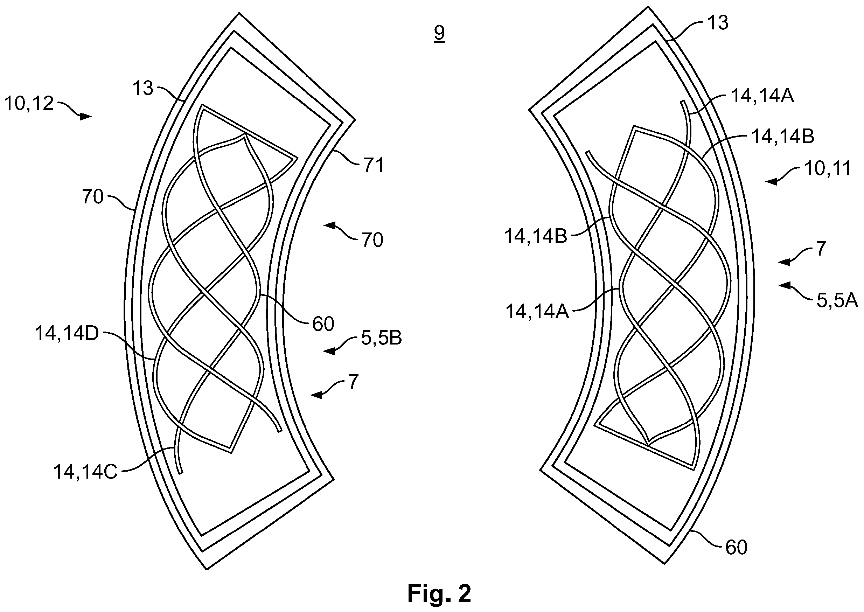

In Fig. 2, a slightly different configuration of the transducers 10 is depicted.

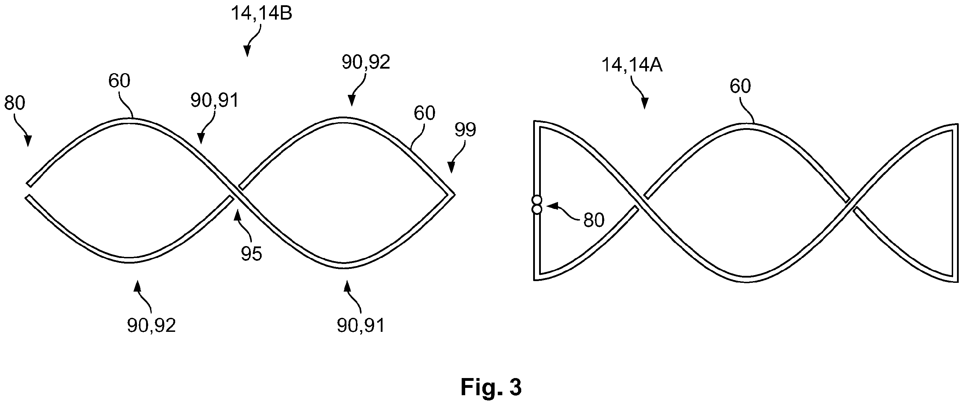

In Fig. 3, the details that are different are further shown. The difference to the embodiment of Fig. 1 is that one of the receiving members 14 in each transducer 10 is embodied more like a candy in contrast to the eye-shaped configuration shown in Fig. 1. The combination of the two receiving members 14 in each transducer 10 is thus shorter than the configuration shown in Fig. 1.

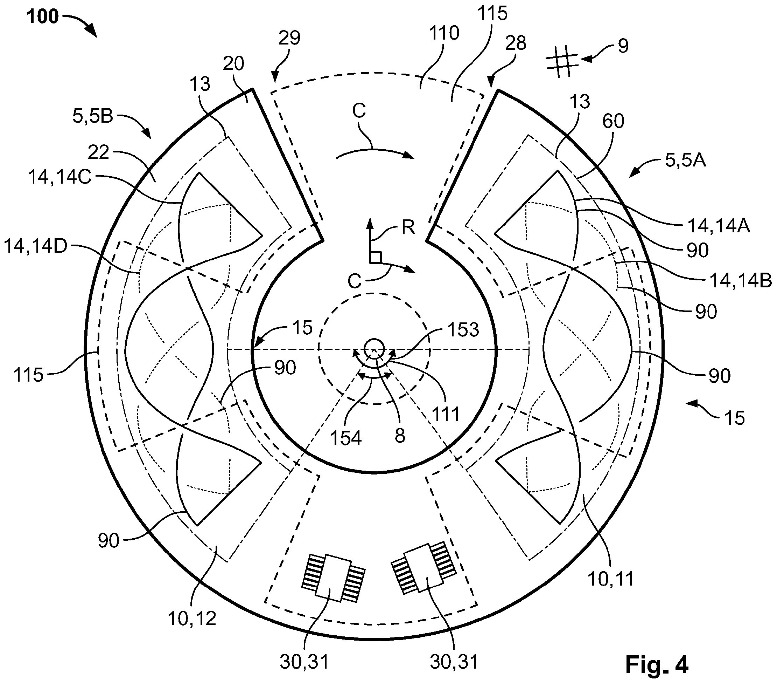

In Fig. 4, a further embodiment of a sensor device 100 is shown. Again, central parts 15 of the two sensing elements 5 are shifted by 180 degrees. The rotational distance between the two transducers 10 is less than the shifting angle 153. An angle 154 of the rotational distance can, for example, be around 60 degrees in this case. This angle 154 can be measured from the end of one transducer 10, 11 to the neighboring end of the other transducer 10, 12.

In the embodiment of Fig 4, the first receiving members 14, 14A, 14C of the first and the second transducers 10, 11, 12 are embodied in a candy-shape. The second receiving members 14, 14B, 14D of the first and the second transducers 10, 11, 12 are embodied in an eye-shape having two convex areas enclosed by the conductors 90.

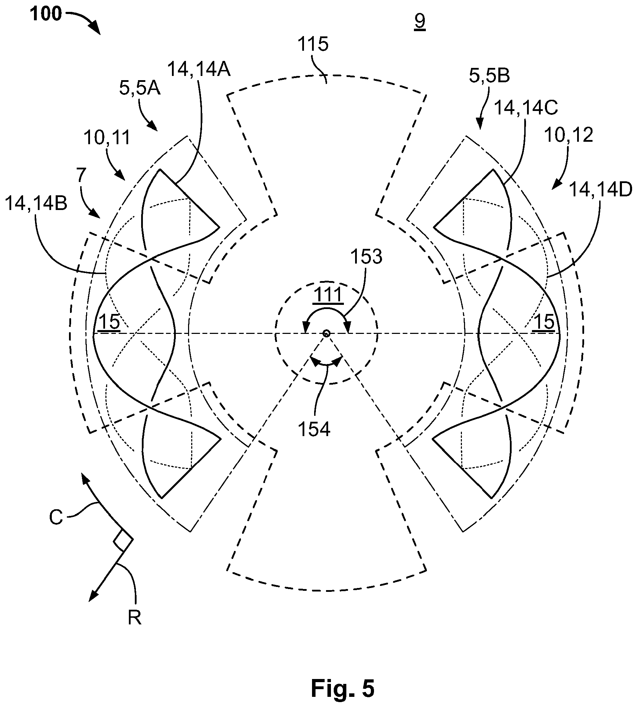

In Fig. 5, the transducers are configured similar to the ones in Fig. 4. However, this embodiment does not comprise a PCB 22. The transducers 10, 11, 12 can be held by other means. Further, no control unit 30 is depicted. Such a control unit 30 can for example be located further away, for example in an engine control unit.

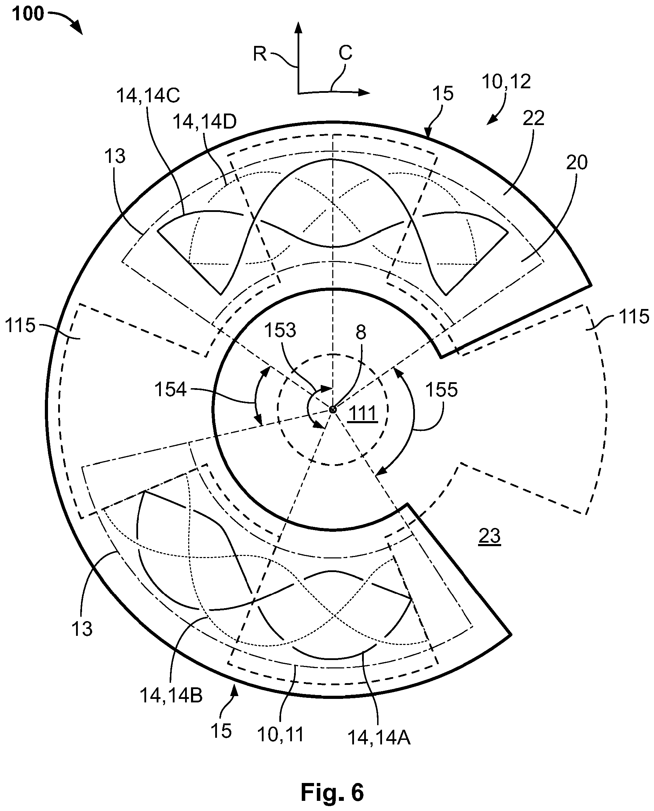

In the embodiment shown in Fig. 6, the transducers 10, 11, 12 each again have one candy-shaped receiving member 14 and one eye-shaped receiving member 14. However, the two transducers 10, 11, 12 are not located exactly opposite to each other relative to the axis 8. Rather, an angle 153 between central parts 15 of the two transducers 10, 11, 12 is less than 180°. In this example, the angle is 157.5° (180°-90°/4) as the number of flaps 115 is four. Due to this, the flaps 115 overlap the first receiving members 14A, 14C of the two transducers 10, 11, 12 simultaneously. The signals from these two receiving members 14, 14A, 14C can thus be combined simply, and they automatically provide the advantage of an improved position measurement, even when the shaft 111 is shifted.

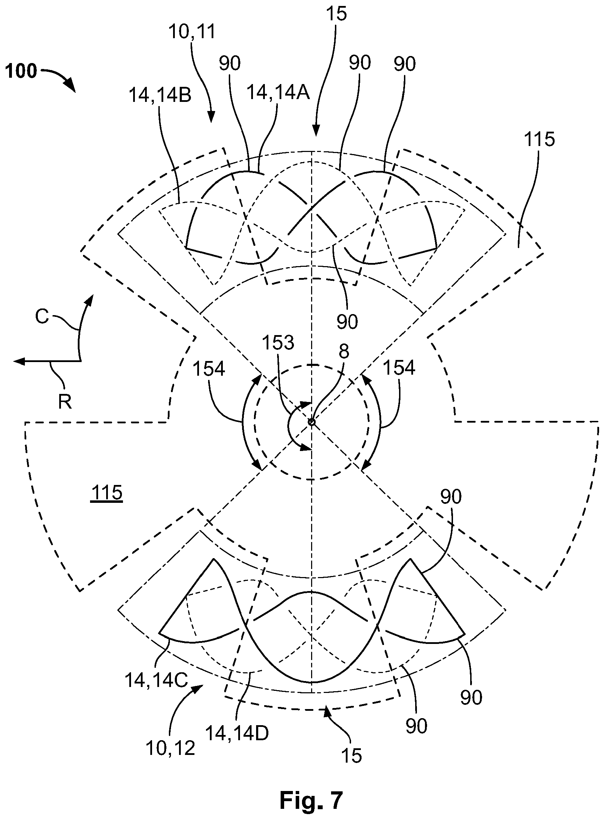

In Fig. 7, a case is shown in which five flaps 115 are present. In such a case, it is not necessary to shift the two transducers away from the 180°-configuration. Rather, they can be located precisely opposite each other. Such a shifting is also not necessary for cases where there is an other odd number of flaps 115, for example three flaps, seven flaps, and so on.

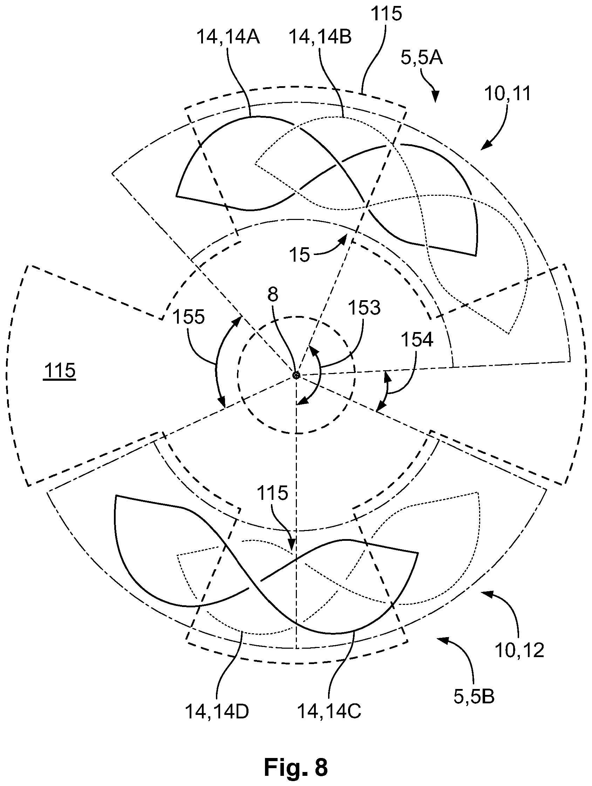

Fig. 8 shows a configuration in which all of the receiving members 14 are configured in the eye-shape. When using such an embodiment together with an even number of flaps 115, for example four flaps 15, a shifting of the two transducers 10 away from the 180°-position relative to each other is advantageous. In the depicted embodiment, the transducers 10, 11, 12 are again shifted by 22.5° (=90°/4) relative to the 180°-position so that the angle 153 between central part 15 is again 157.5°. Hence, the angle 154 of a rotational distance between the two transducers 10, 11, 12 is smaller and then the corresponding angle 155 on the other side.

### REFERENCE NUMERALS

- 5: sensing element
- 5A: first sensing element
- 5B: second sensing element
- 7: electromagnetic sensing element
- 8: axis of rotation
- 9: plane
- 10: transducer
- 11: first transducer
- 12: second transducer
- 13: sender member
- 14: receiving member
- 14 A: first receiving member
- 14 B: second receiving member
- 14 C: first receiving member
- 14 D: second receiving member
- 15: central part
- 20: arcuate carrier
- 22: PCB
- 23: opening
- 25: central part
- 28: end
- 29: end
- 30: controller
- 31: integrated circuit
- 60: conductive path
- 70: coil
- 71: spiral coil
- 80: contact section
- 90: conductor
- 91: first conductor
- 92: second conductor
- 95: crossing
- 99: junction
- 100: sensor device
- 110: element
- 111: shaft
- 115: flap
- 151: angle
- 152: angle
- 153: angle
- 154: angle
- 155: angle
- 161: inner edge
- 162: outer edge

- C: circumferential direction
- R: radial direction

## Claims

1. Sensor device (100) for measuring the rotational position of an element (110) that is rotatable about an axis of rotation (8), the sensor device (100) comprising at least two sensing elements (5) wherein the at least two sensing elements (5) are shifted with respect to each other by at least 120 degrees about the axis of rotation (8), wherein the sensing elements (5) are electromagnetic sensing elements (7), wherein the electromagnetic sensing elements (7) are electromagnetic transducers (10), each transducer (10) having at least one sender member (13) for emitting a magnetic field and at least two receiving members (14) for receiving the magnetic field, wherein the at least two transducers (10) are shifted with respect to each other by at least 120 degrees about the axis of rotation (8), **characterized in that** at least two receiving members (14) of two different transducers among said electromagnetic transducers (10) are connected electrically to each other.

2. Sensor device (100) according to claim 1, wherein the sensor device (100) comprises an arcuate carrier (20) with an opening (23) that is adapted to receive the rotatable element (110) perpendicular to the axis (8).

3. Sensor device (100) according to claim 2, wherein each of the sensing elements (5) is arranged closer to one end (28, 29) than to a central part (25) of the arcuate carrier (20).

4. Sensor device (100) according to one of claims 2 or 3, wherein the arcuate carrier (20) extends for more than 180 degrees around the axis (8).

5. Sensor device (100) according to one of claims 1 to 4, wherein the two sensing elements (5) are arranged opposite to each other relative to the axis (8).

6. Sensor device (100) according to one of claims 1 to 5, wherein the at least two sender members (13) are connected to each other.

7. Sensor device (100) according to one of claims 1 to 6, wherein the two transducers (10) are configured identical, each with a first receiving member (14, 14A, 14C) and a second receiving member (14, 14B, 14D) and wherein the first receiving member (14, 14A) of one transducer (10, 11) is coupled with the second receiving member (14, 14D) of the other transducer (10, 12).

8. Sensor device (100) according to claim 7, wherein the second receiving member (14, 14B) of one transducer (10, 11) is coupled with the first receiving member (14, 14C) of the other transducer (10, 12).

9. Sensor device (100) according to one of claims 1 to 8, wherein one transducer (10, 11) is configured to emit and receive a first magnetic field that has at the receiving members (14, 14A, 14B) a direction that is opposite to a direction of a second magnetic field emitted and received by the other transducer (10, 12) at the receiving members (14, 14C, 14D).

10. Sensor device (100) according to one of claims 1 to 9, wherein the sender member (13) and/or at least one receiving member (14) lie in a plane (9).

11. Sensor device (100) according to one of claims 1 to 10, wherein the sender member (13) comprises a coil (70).

12. Sensor device (100) according to one of claims 1 to 11, wherein the sender member (13) surrounds the receiving members (14).

## Patentansprüche

1. Sensorvorrichtung (100) zum Messen der Drehposition eines Elementes (110), das um eine Drehachse (8) herum gedreht werden kann, wobei die Sensorvorrichtung (100) wenigstens zwei Sensorelemente (5) umfasst, die wenigstens zwei Sensorelemente (5) in Bezug zueinander um wenigstens 120° um die Drehachse (8) herum versetzt sind, die Sensorelemente (5) elektromagnetische Sensorelemente (7) sind, die elektromagnetischen Sensorelemente (7) elektromagnetische Wandler (10) sind, wobei jeder Wandler (10) wenigstens ein Senderteil (13) zum Emittieren eines Magnetfeldes sowie wenigstens zwei Empfängerteile (14) zum Empfangen des Magnetfeldes aufweist, wobei die wenigstens zwei Wandler (10) in Bezug zueinander um wenigstens 120° um die Drehachse (8) herum versetzt sind, **dadurch gekennzeichnet, dass** wenigstens zwei Empfängerteile (14) zweier verschiedener Wandler unter den elektromagnetischen Wandlern (10) elektrisch miteinander verbunden sind.

2. Sensorvorrichtung (1) nach Anspruch 1, wobei die Sensorvorrichtung (100) einen bogenförmigen Träger (20) mit einer Öffnung (23) umfasst, die so eingerichtet ist, dass sie das drehbare Element (110) senkrecht zu der Achse (8) aufnimmt.

3. Sensorvorrichtung (100) nach Anspruch 2, wobei jedes der Sensorelemente (5) näher an einem Ende (28, 29) als an einem mittleren Teil (25) des bogenförmigen Trägers (20) angeordnet ist.

4. Sensorvorrichtung (100) nach einem der Ansprüche 2 oder 3, wobei sich der bogenförmige Träger (20) um mehr als 180° um die Achse (8) herum erstreckt.

5. Sensorvorrichtung (100) nach einem der Ansprüche 1 bis 4, wobei die zwei Sensorelemente (5) relativ zu der Achse (8) einander gegenüberliegend angeordnet sind.

6. Sensorvorrichtung (1) nach einem der Ansprüche 1 bis 5, wobei die wenigstens zwei Senderteile (13) miteinander verbunden sind.

7. Sensorvorrichtung (100) nach einem der Ansprüche 1 bis 6, wobei die zwei Wandler (10) identisch ausgeführt sind, und jeweils ein erstes Empfängerteil (14, 14A, 14C) sowie ein zweites Empfängerteil (14, 14B, 14D) aufweisen und wobei das erste Empfängerteil (14, 14A) eines Wandlers (10, 11) mit dem zweiten Empfängerteil (14, 14D) des anderen Wandlers (10, 12) gekoppelt ist.

8. Sensorvorrichtung (100) nach Anspruch 7, wobei das zweite Empfängerteil (14, 14B) eines Wandlers (10, 11) mit dem ersten Empfängerteil (14, 14C) des anderen Wandlers (10, 12) gekoppelt ist.

9. Sensorvorrichtung (100) nach einem der Ansprüche 1 bis 8, wobei ein Wandler (10, 11) so ausgeführt ist, dass er ein erstes Magnetfeld emittiert und empfängt, das an den Empfängerteilen (14, 14A, 14B) eine Richtung hat, die entgegengesetzt zu einer Richtung eines zweiten Magnetfeldes ist, das von dem anderen Wandler (10, 12) an den Empfängerteilen (14, 14C, 14D) emittiert und empfangen wird.

10. Sensorvorrichtung (100) nach einem der Ansprüche 1 bis 9, wobei das Senderteil (13) und/oder wenigstens ein Empfängerteil (14) in einer Ebene (9) liegen.

11. Sensorvorrichtung (100) nach einem der Ansprüche 1 bis 10, wobei das Senderteil (1) eine Spule (70) umfasst.

12. Sensorvorrichtung (100) nach einem der Ansprüche 1 bis 11, wobei das Senderteil (1) die Empfängerteile (14) umschließt.

## Revendications

1. Dispositif de détection (100) pour mesurer la position de rotation d'un élément (110) qui est rotatif autour d'un axe de rotation (8), le dispositif de détection (100) comprenant au moins deux éléments de détection (5) dans lesquels les au moins deux éléments de détection (5) sont décalés l'un par rapport à l'autre d'au moins 120 degrés autour de l'axe de rotation (8), dans lequel les éléments de détection (5) sont des éléments de détection électromagnétiques (7), dans lequel les éléments de détection électromagnétiques (7) sont des transducteurs électromagnétiques (10), chaque transducteur (10) ayant au moins un élément émetteur (13) pour émettre un champ magnétique et au moins deux éléments récepteurs (14) pour recevoir le champ magnétique, dans lequel les au moins deux transducteurs (10) sont décalés l'un par rapport à l'autre d'au moins 120 degrés autour de l'axe de rotation (8), **caractérisé par le fait qu'**au moins deux éléments récepteurs (14) de deux transducteurs différents parmi lesdits transducteurs électromagnétiques (10) sont connectés électriquement l'un à l'autre.

2. Dispositif de détection (100) selon la revendication 1, dans lequel le dispositif de détection (100) comprend un support arqué (20) avec une ouverture (23) adaptée pour recevoir l'élément (110) rotatif perpendiculairement à l'axe (8).

3. Dispositif de détection (100) selon la revendication 2, dans lequel chacun des éléments de détection (5) est disposé plus près d'une extrémité (28, 29) que d'une partie centrale (25) du support arqué (20).

4. Dispositif de détection (100) selon l'une des revendications 2 ou 3, dans lequel le support arqué (20) s'étend sur plus de 180 degrés autour de l'axe (8).

5. Dispositif de détection (100) selon l'une des revendications 1 à 4, dans lequel les deux éléments de détection (5) sont disposés à l'opposé l'un de l'autre par rapport à l'axe (8).

6. Dispositif de détection (100) selon l'une des revendications 1 à 5, dans lequel les au moins deux éléments émetteurs (13) sont reliés l'un à l'autre.

7. Dispositif de détection (100) selon l'une des revendications 1 à 6, dans lequel les deux transducteurs (10) sont configurés de manière identique, chacun avec un premier élément récepteur (14, 14A, 14C) et un deuxième élément récepteur (14, 14B, 14D) et dans lequel le premier élément récepteur (14, 14A) d'un transducteur (10, 11) est couplé avec le deuxième élément récepteur (14, 14D) de l'autre transducteur (10, 12).

8. Dispositif de détection (100) selon la revendication 7, dans lequel le deuxième élément récepteur (14, 14B) d'un transducteur (10, 11) est couplé au premier élément récepteur (14, 14C) de l'autre transducteur (10, 12).

9. Dispositif de détection (100) selon l'une des revendications 1 à 8, dans lequel un transducteur (10, 11) est configuré pour émettre et recevoir un premier champ magnétique qui a, au niveau des éléments récepteurs (14, 14A, 14B), un sens opposé à un sens d'un deuxième champ magnétique émis et reçu par l'autre transducteur (10, 12) au niveau des éléments récepteurs (14, 14C, 14D).

10. Dispositif de détection (100) selon l'une des revendications 1 à 9, dans lequel l'élément émetteur (13) et/ou au moins un élément récepteur (14) se trouvent dans un plan (9).

11. Dispositif de détection (100) selon l'une des revendications 1 à 10, dans lequel l'élément émetteur (13) comprend une bobine (70).

12. Dispositif de détection (100) selon l'une des revendications 1 à 11, dans lequel l'élément émetteur (13) entoure l'élément récepteur (14).
